# EUROPEAN PATENT APPLICATION

(11) **EP 2 472 841 A1**
(43) Date of publication of application: **04.07.2012**
(21) Application number: 11195492.1
(22) Date of filing: 23.12.2011
(51) Int. Cl.: H04N 1/00

(54) **Image scanning system, scanned image processing apparatus, computer readable storage programs for their executions, image scanning method, and scanned image processing method**

(30) Priority: 28.12.2010 JP 2010293265
(71) Applicant: Konica Minolta Business Technologies, Inc., Tokyo 100-0005 (JP)
(72) Inventor: Inoue, Akira, Tokyo, Tokyo 100-0005 (JP)
(74) Representative: Higgs, Jonathan

(57) **Abstract**

The image scanning system according to the present invention comprising: a plurality of blade substrates A ,B that execute image processing; an image scanning unit that scans a document as image data; an image process distribution unit that distributes the image data scanned by the image scanning unit to each blade substrate and causes the image data to be processed in parallel simultaneously with scanning of the document by the image scanning unit.

## Description

### BACKGROUND

### 1. Technical Field

The present invention relates to an image scanning system, a scanned image processing apparatus, a computer readable storage medium storing programs for their executions, an image scanning method, and a scanned image processing method.

### 2. Description of Related Art

The document scanning speed by scanning operations of printers has been increasing substantially in recent years. Under the circumstance, a problem has been caused that the printer's memory becomes saturated when the speed of scanned image processing cannot catch up with the scanning speed, and causes the scanning process to abort.

As a technology to execute the rasterization process more efficiently, a method has been proposed to distribute the rasterization process among a plurality of image forming apparatuses by means of controlling the resource status such as CPU powers of the plurality of image forming apparatuses as disclosed in Unexamined Japanese Patent Publication No. 2006-159741.

However, the prior art mentioned above has a problem of being not corresponding to the increased speed of scanning because of distributing only the rasterization process among a plurality of devices.

### SUMMARY

To achieve at least one of the abovementioned objects, an image scanning system reflecting one aspect of the present invention comprises:
a plurality of blade substrates that executes image processing;
an image scanning unit that scans a document as image data; and
an image process distribution unit that distributes said image data scanned by said image scanning unit to each blade substrate and causes said image data to be processed in parallel simultaneously with scanning of said document by said image scanning unit.

Moreover, to achieve at least one of the abovementioned objects, a scanned image processing apparatus reflecting one aspect of the present invention comprises:
a plurality of blade substrates that execute image processing;
an image process distribution unit that distributes scanned image data to each blade and causes said image data to be processed in parallel simultaneously with the receiving of image data by said image scanning unit.

Moreover, to achieve at least one of the abovementioned objects, a computer readable recording medium stored with a program to be executed by an image scanning system reflecting one aspect of the present invention, said program causing a computer to execute a process comprises:
(a) a step of causing a plurality of blade substrates to execute image processing;
(b) a step of scanning a document as image data; and
(c) a step of distributing said image data scanned in said step (b) and causing said image data to be processed in parallel simultaneously with the scanning of said document in said step (b).

Moreover, to achieve at least one of the abovementioned objects, a computer readable recording medium stored with a program to be executed by a scanned image processing apparatus reflecting one aspect of the present invention, said program causing a computer to execute a process comprising:
(d) a step of causing a plurality of blade substrates to execute image processing; and
(e) a step of distributing scanned image data to each blade and causing said image data to be processed in parallel simultaneously with the receiving of said image data.

Moreover, to achieve at least one of the abovementioned objects, an image scanning method reflecting one aspect of the present invention comprises:
(a) a step of causing a plurality of blade substrates to execute image processing;
(b) a step of scanning a document as image data; and
(c) a step of distributing said image data scanned in said step (b) to each blade substrate and causing said image data to be processed in parallel simultaneously with the scanning of said document in step (b).

Moreover, to achieve at least one of the abovementioned objects, a scanned image processing method reflecting one aspect of the present invention comprises:
(d) a step of causing a plurality of blade substrates to execute image processing; and
(e) a step of distributing scanned image data to each blade and causes said image data to be processed in parallel simultaneously with the receiving of said image data.
Moreover, the scanned image processing method may further comprise:
a step of causing at least one of said plurality of blade substrates to consolidate the image data processed by other blade substrates in order to make a file.
Moreover, to achieve at least one of the abovementioned objects, a non-transitory computer readable storage medium stored with a program to be executed by an image scanning system is provided, said program causing a computer to execute a process comprising:
(a) a step of causing a plurality of blade substrates to execute image processing;
(b) a step of scanning a document as image data; and
(c) a step of distributing said image data scanned in said step (b) and causing said image data to be processed in parallel simultaneously with the scanning of said document in said step (b).
The program of the non-transitory computer readable storage medium preferably further causes the computer to execute:
a step of causing at least one of said plurality of blade substrates to consolidate the image data processed by other blade substrates in order to make a file.
Moreover, to achieve at least one of the abovementioned objects, a non-transitory computer readable storage medium stored with a program to be executed by a scanned image processing apparatus is provided, said program causing a computer to execute a process comprising:
(d) a step of causing a plurality of blade substrates to execute image processing; and
(e) a step of distributing scanned image data to each blade and causing said image data to be processed in parallel simultaneously with the receiving of said image data.
The program of the non-transitory computer readable storage medium preferably further causes the computer to execute:
a step of causing at least one of said plurality of blade substrates to consolidate the image data processed by other blade substrates in order to make a file.

The objects, features, and characteristics of this invention other than those set forth above will become apparent from the description given herein below with reference to preferred embodiments illustrated in the accompanying drawings.

### BRIEF DESCRIPTION OF THE DRAWINGS

Fig. 1 is a block diagram showing an MFP and a controller that configure the image scanning system according to an embodiment of the present invention.

Fig. 2 is a block diagram showing the configuration of the MFP.

Fig. 3 is a block diagram showing the configuration of the controller.

Fig. 4 is a block diagram showing the configuration of a master blade.

Fig. 5 is a block diagram showing the configuration of a sub-blade.

Fig. 6 is a diagram showing the functional blocks of the master blade and the sub-blade.

Fig. 7 is a diagram showing the flowchart concerning the scanned image transfer function of the image scanning system and the image processing system using an MFP according to the embodiment of the present invention.

Fig. 8 is a diagram showing the flowchart concerning the externally scanned image receiving function of the image scanning system and the image processing system using the master blade according to the embodiment of the present invention.

Fig. 9 is a diagram showing the flowchart concerning the distribution instruction function of the image scanning system and the image processing system using the master blade according to the embodiment of the present invention.

Fig. 10 is a diagram showing the flowchart concerning the consolidation process execution blade determination function of the image scanning system and the image processing system using the master blade according to the embodiment of the present invention.

Fig. 11 is a diagram showing the flowchart concerning the scanned image transfer function of the image scanning system and the image processing system using the master blade according to the embodiment of the present invention.

Fig. 12 is a diagram showing the flowchart concerning the scanned image receiving function of the image scanning system and the image processing system using each blade according to the embodiment of the present invention.

Fig. 13 is a diagram showing the flowchart concerning the image processing function of the image scanning system and the image processing system using each blade according to the embodiment of the present invention.

Fig. 14 is a diagram showing the flowchart concerning the compressed image transfer function of the image scanning system and the image processing system using each blade according to the embodiment of the present invention.

Fig. 15 is a diagram showing the flowchart concerning the compressed image receiving function of the image scanning system and the image processing system using each blade according to the embodiment of the present invention.

Fig. 16 is a diagram showing the flowchart concerning the consolidation function of the image scanning system and the image processing system using each blade according to the embodiment of the present invention.

Fig. 17 is a block diagram showing the configuration of the controller according to another embodiment of the present invention.

### DETAILED DESCRIPTION

The details of the image scanning system, the scanned image processing apparatus, the computer readable storage medium storing programs for their executions, the image scanning method, and the scanned image processing method are described below with reference to the accompanying drawings.

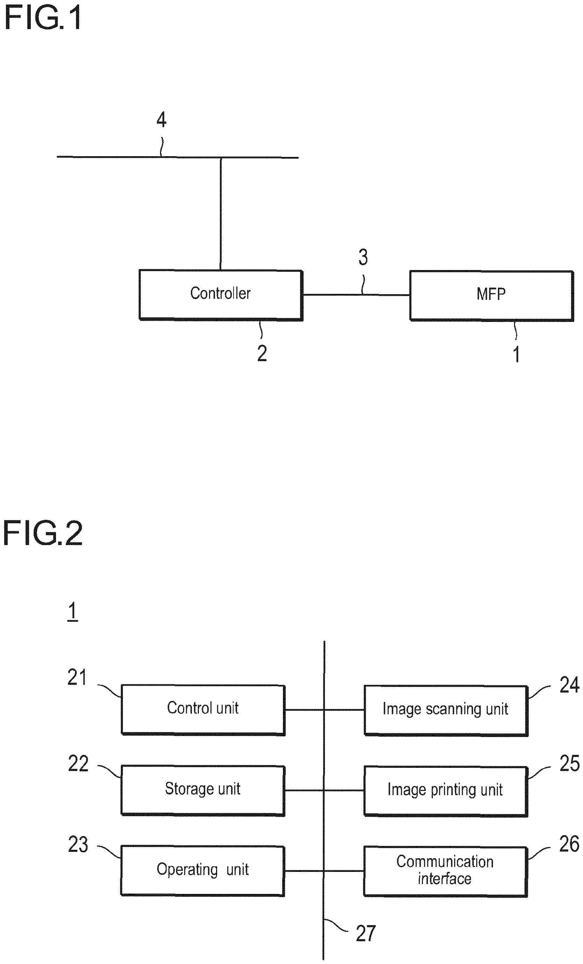

Fig. 1 is a block diagram showing an MFP (Multi-Function Peripheral) and a controller that configure the image scanning system according to an embodiment of the present invention.

As shown in Fig. 1, the image scanning system according to the present embodiment can be configured with the MFP (image scanning apparatus) 1 and the controller (scanned image processing apparatus, scanned image processing system) 2. The MFP 1 and the controller 2 can be connected by a VIF (Video Interface) 3. The controller 2 is connected to a LAN (Local Area Network) 4 and can receive print job from a PC (Personal Computer which is not shown) connected via the LAN 4.

Fig. 2 is a block diagram showing the configuration of the MFP.

As shown in Fig. 2, the MFP 1 comprises a control unit 21, a storage unit 22, an operating unit 23, an image scanning unit 24, an image printing unit 25, and a communication interface 26, and all of which are connected via bus 27 for exchanging signals.

The control unit 21 includes a CPU (Central Processing Unit), and controls each unit mentioned above and conducts various arithmetic processes according to the program. More specifically, the control unit 21 performs all kinds of controls concerning image forming processes in coordination of various functional blocks that configure the MFP 1.

The storage unit 22 comprises a ROM (Read Only Memory) for preliminarily storing various kinds of programs and data, a RAM (Random Access Memory) for temporarily storing programs and data as a work area, an HDD (Hard Disk Drive) for temporarily storing image data obtained by image processing, etc.

The operating unit 23 consists of a touch screen for displaying various kinds of information and for entering various kinds of settings, a ten key for setting the number of copies to make, etc., a start key for commanding the start of operation, a stop key for commanding the stop of operation, various fixed keys such as a reset key for initialized various setting conditions, display lamps, etc.

The image scanning unit 24 irradiates the document which is set at the designated scanning position of the document table, or transferred to the designated scanning position by the ADF (Auto Document Feeder), with a light source such as a fluorescent lamp, and converts the light reflected from the document by an imaging apparatus such as a CCD (Charge Coupled Device) image sensor in order to generate image data (e.g., bitmap data) from its electrical signal. The image scanning unit 24 transmits the generated image data from the communication interface 26 to the controller 2 via the VIF 3.

The image printing unit 25 prints on a sheet of paper an image based on image data by means of the electronic photographing method comprising charging, exposure, development, transfer, and fixing processes, and discharges the printed sheet. Specifically, the image printing unit 25 can receive image data processed by the controller 2 via the communication interface 26, form an image using a developing material, and print the image.

The communication interface 26 is an interface for communicating between the MFP 1 and external apparatus and can be constituted of a network interface based on standards such as Ethernet, TokenRing, FDDI, etc., a serial interface such as USB, IEEE 1394, etc., a parallel interface such as SCSI, IEEE 1284, etc., various kinds of local connection interfaces such as a wireless communication interface such as Bluetooth (registered trademark) IEEE 802.11, HomeRF, IrDA, etc., a telephone circuit interface for connecting with a telephone circuit, and the like.

The MFP 1 can have a plurality of functions including the function as scanner for transmitting image data obtained by scanning a document image to external apparatus, the function as a printer for printing out an image based on image data received from external apparatus, the function as a copying machine for printing out an image based on image data obtained by scanning a document image, and the function as a facsimile machine for sending and receiving image data via a telephone circuit.

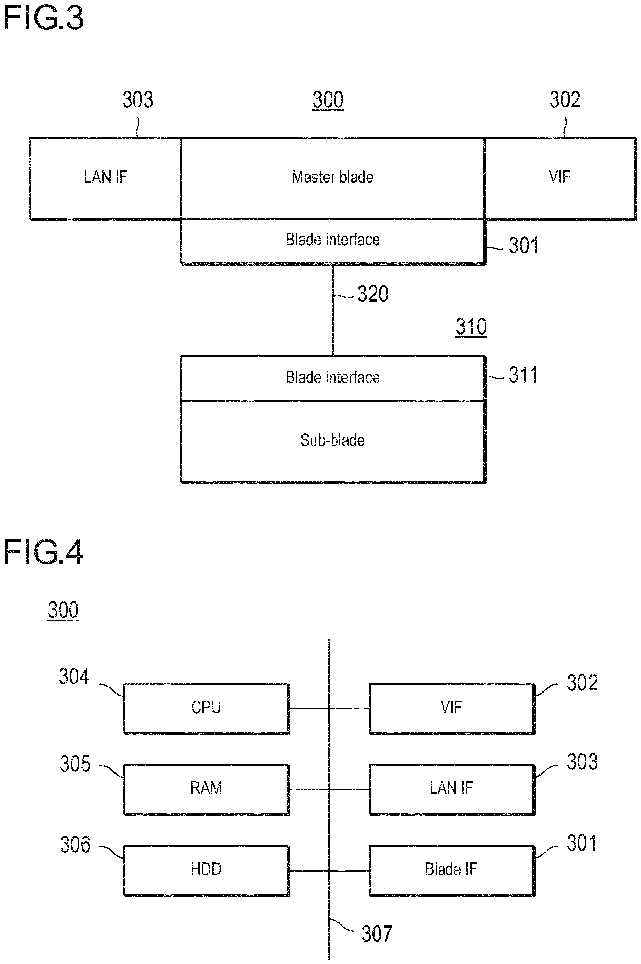

Fig. 3 is a block diagram showing the configuration of the controller according to the present embodiment.

As shown in Fig. 3, the controller 2 has a blade connection configuration, in which a master blade (blade substrate) 300 and a sub-blade (blade substrate) 310 are connected. The master blade 300 and the sub-blade 310 are connected by interactive communication via an inter blade interface 320. The master blade 300 has a VIF 302 for the connection with the MFP 1 and a LAN communication interface 303 for connection with an external LAN 4.

Although the sub-blade 310 is shown as a single unit in Fig. 3, the number of sub-blade 310 can be more than one.

Fig. 4 is a block diagram showing the configuration of a master blade.

As shown in Fig. 4, the master blade 300 has a CPU 304, a RAM 305, an HDD 306, a VIF 302, a LAN communication interface 303, and an inter blade interface 301.

The CPU 304 controls various elements described above and executes various kinds of arithmetic operations in accordance with program. The RAM 305 stores program data , print data such as PDL (Page Description Language), image data after rasterization, and scanned image data (image data obtained by scanning a document; hereinafter referred to as "scanned image"). The HDD 306 stores files obtained as a result after the scanning process is completed (file data generated by image processing scanned images) and programs. The VIF 302 is an interface for interactive communication with the MFP 1. The LAN communication interface 303 is an interface for communicating with public networks. The inter blade communication interface 301 is an interface for interactive communication with the sub blade 310. These constituents are connected with each other via the bus 307 in order to exchange signals.

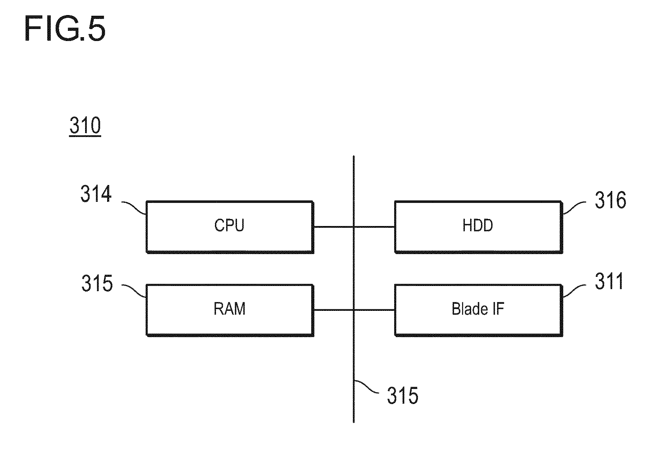

Fig. 5 is a block diagram showing the configuration of a sub-blade.

As shown in Fig. 5, the sub-blade 310 has a CPU 314, a RAM 315, an HDD 316, and an inter blade interface 311.

The CPU 314 controls various elements described above and executes various kinds of arithmetic operations in accordance with program. The RAM 315 stores program data, print data such as PDL, image data obtained as a result of rasterization, and scanned images. The HDD 316 stores files and programs after the scanning process is completed. The inter blade communication interface 311 is an interface for interactive communication with the master blade 300 or the other sub-blade. These constituents are connected with each other via the bus 315 in order to exchange signals.

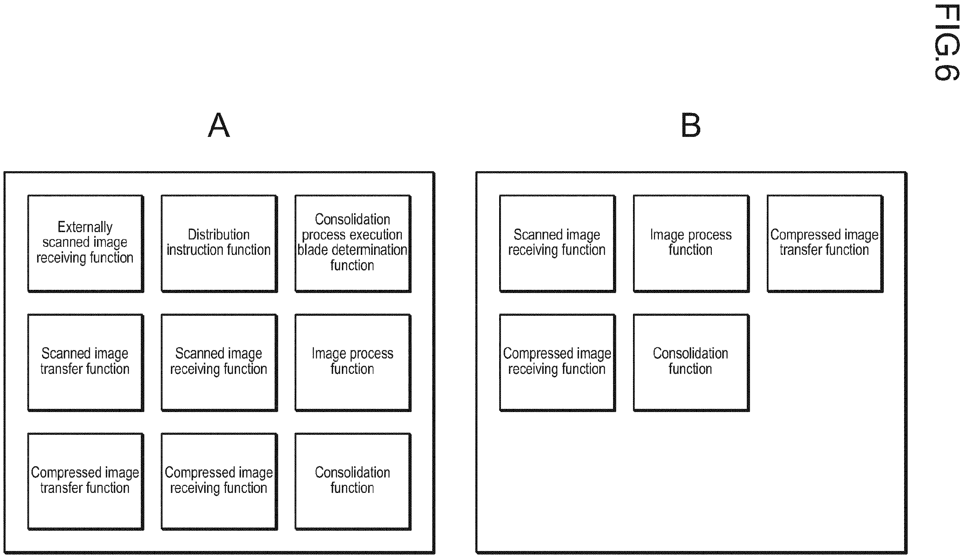

Fig. 6 is a diagram showing the functional blocks of the master blade and the sub-blade. Fig. 6A is a diagram showing the functional blocks of the mater blade while Fig. 6 B is a diagram showing the functional blocks of the sub-blade.

As shown in Fig. 6A, the master blade 300 comprises (1) scanned image receiving function, (2) distribution instruction function, (3) consolidation process execution blade determination function, (4) scanned image transfer function, (5) scanned image receiving function, (6) image process function, (7) compressed image transfer function, (8) compressed image receiving function, and (9) consolidation function.

As shown in Fig. 6 B, the sub-blade 310 comprises (1) scanned image receiving function, (2) image process function, (3) compressed image transfer function, (4) compressed image receiving function, and (5) consolidation function.

As shown in Fig. 6, the functions of the master blade 300 and the functions of the sub-blade 310 have some commonalities, and those functions are referred to as "common functions."

The external scanned image receiving function is a function that receives scanned images from the MFP 1 which is an external apparatus via the VIF 302.

The distribution instruction function is a function that controls the statuses of the master blade 300 itself as well as the sub-blade 310 connected to it to find a blade that is capable of image processing, negotiates with the blade on the image processing, and notifies the image transfer function block of the execution source blade (master blade 300 in this case), about the blade which is selected to execute the image process as a result of the negotiation.

The consolidation process execution blade determination function is a function that controls the statuses of the master blade 300 itself as well as the sub-blade 310 connected to it to find a blade that is capable of consolidation process, negotiates with the blade on the consolidation process, and notifies the image transfer function block of the execution source about the blade which is selected to execute the consolidation process as a result of the negotiation.

The scan image transfer function is a function that negotiates with the blade which is supposed to process the image as instructed by the distribution process function about the request of communication connection, and transfers the scanned image to the blade when the communication becomes possible.

The scanned image receiving function is a function that stores (develops) the scanned image to the RAMs 305 and 315 of its own blade by receiving the scanned image from another blade.

The image process function is a function that executes image processes to the scanned image stored in the RAM of its own blade such as surface to point conversion, image rotation, and compression, and stores the scanned image after the image processes to the RAMs 305 and 315.

The compressed image transfer function is a function that searches a blade that is capable of the consolidation process that is determined by the consolidation process execution blade determination function when a compressed image transfer request is received, negotiates with it about the transfer of the compressed image, and transfers the compressed image if it can be transferred.

The compressed image receiving function is a function that makes a judgment as to whether or not a compressed image can be received when the blade that is supposed to execute consolidation function receives a request for the transfer of the compressed image from another blade, replies that the receiving is possible if the receiving is possible, and receives the compressed image from said other blade.

The consolidation function is a function of a blade that is supposed to execute the consolidation function to convert the compressed image it received to a file. The conversion to a file means converting an image to a file format such as PDF (Portable Document Format) or TIFF (Tagged Image File Format).

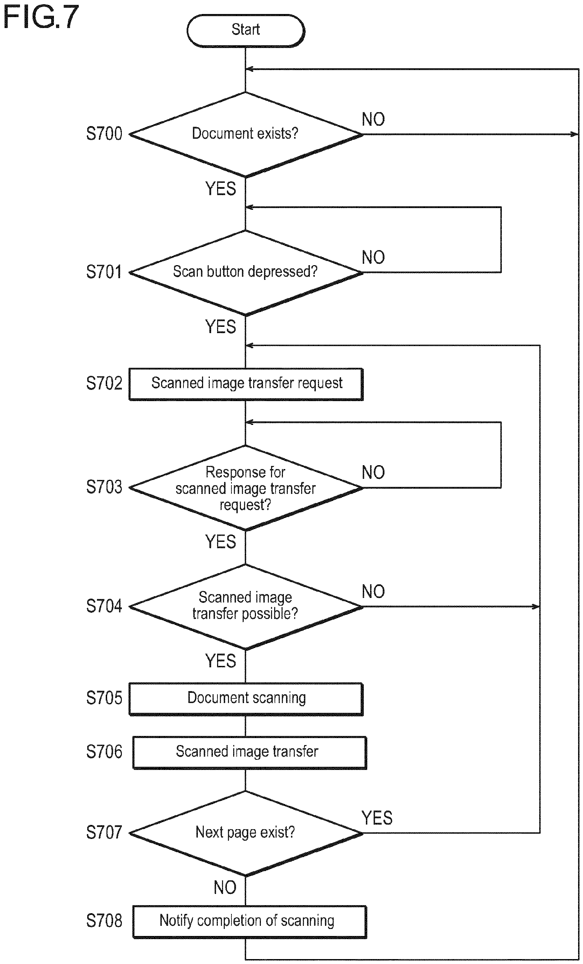

Each of the functions of the image scanning system and the image processing system is described in detail with reference to the flowchart of Figs. 7-16. Each of the functions to be described below can be executed in parallel. Also, each of these functions can be executed by the program.

First, the functions of the MFP 1 are described.

Fig. 7 is a diagram showing the flowchart concerning the scanned image transfer function of the image scanning system and the image processing system using an MFP according to the embodiment of the present invention.

The MFP 1 checks whether or not a document exists in the image scanning unit 24 (S700), and waits for the scan button to be depressed when it judges that a document exists (S701: No). At this state, when the scan button is depressed by the user (S701: Yes), the MFP 1 scans the document to take it in as image data, requests the master blade 300 to transfer the scanned image (image data) (S702), and waits for a response from the master blade 300 concerning the scanned image transfer request (S703: No).

If there is a response from the master blade 300 (S703: Yes), and the response indicates that the scanned image cannot be transferred (S704: No), the MFP 1 requests the scanned image transfer again (S702). If the response from the master blade 300 indicates that the scanned image can be transferred (S704: Yes), the MFP 1 scans the document to take it in as the scanned image (S705) by means of the image scanning unit 24, and transfers the scanned image to the master blade 300 (S706).

When the scanning of a sheet of document and the transfer of the scanned image are finished, the MFP 1 makes a judgment as to whether following document exists in the document scanning unit 24, if following document exists (S707: Yes) requests the master blade 300 to transfer the scanned image of the particular document again (S702), and waits for the response on the request of transfer of the scanned image from the master blade 300 (S703: No). If there is no document (S707: No), the MFP 1 notifies the master blade 300 that the scanning is completed (S708).

Next, the functions of the master blade 300 are described.

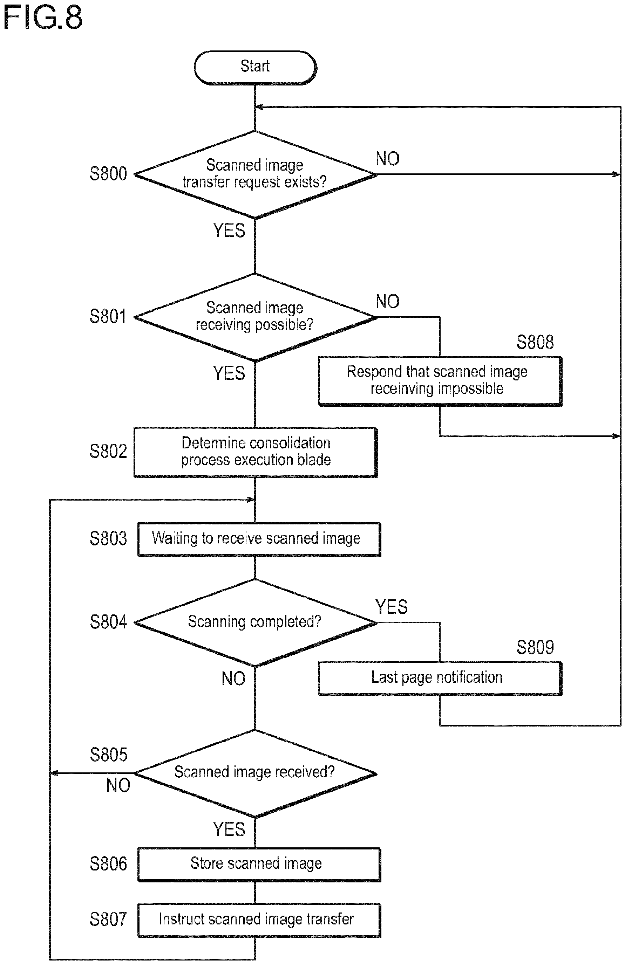

Fig. 8 is a diagram showing the flowchart concerning the externally scanned image receiving function of the image scanning system and the image processing system using the master blade according to the embodiment of the present invention.

The master blade 300 is currently at the condition of waiting for the transfer request of the scanned image from the MFP 1 (S800: No); if it receives from the MFP 1 a request for transferring the scanned image (S800: Yes), it makes a judgment as to whether the scanned image can be received or not (S801). The judgment is made based on whether or not any vacancy for storing scanned image data exists in the RAM 305 of the master blade 300. The master blade 300 can also make such a judgment based on whether or not the master blade 300 is currently engaged in the process of another job.

When the master blade 300 judges that the scanned image cannot be received (S801: No), it responds to the MFP 1 that it cannot receive the scanned image (S808). On the other hand, if it judges that the scanned image can be received (S801: Yes), it executes the consolidation process execution blade determination function to ask all blades including itself for the consolidation process, and determines which blade is to execute the consolidation function (S802). Furthermore, it responds to the MFP 1 that the transfer of the scanned image is possible and goes into the waiting status for the scanned image to receive (S803).

If the master blade 300 does not receive the notice of the completion of the scanning process from the MFP 1 (S804: No), but receives the scanned image with the page number from the MFP 1 (S805: Yes), it stores the received scanned image into the RAM 305 (S806). And it executes the distribution instruction function to issue the distribution instruction to each of the blades including itself, which are capable of being involved in the distribution process of the image, and executes the scanned image transfer function to issue a scanned image transfer instruction including the page number, the transfer destination blade, and the address of the storage destination RAM (S807). After that, it goes into the waiting status for receiving the scanned image again (S803).

In case the scanning completion notice is received from the MFP 1 (S804: Yes), terminate the scanning by notifying the last page number to the consolidation function executing blade (S809), and goes into the waiting status for the scanned image transfer request from the MFP 1 (S800).

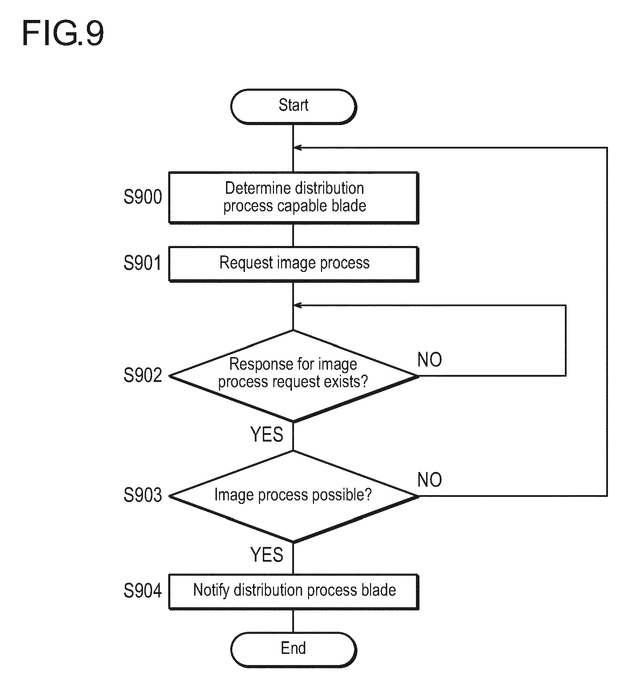

Fig. 9 is a diagram showing the flowchart concerning the distribution instruction function of the image scanning system and the image processing system using the master blade according to the embodiment of the present invention. The present function is executed by the master blade 300 when it receives the scanned image from the MFP 1.

The master blade 300 controls status of each blade including itself, determines the blade capable of image distribution process (S900), issues an image process request to the determined blade (S901), and waits for a response to the request (S902: No).

When the response from the blade is received (S902: Yes) and the response indicates that the image process cannot be done (S903: No), determines another blade that is capable of image distribution process of the image (S900), and waits for its response (S901,S902).

If the response from the blade indicates that the image processing is possible (S903: Yes), it notifies its own scanned image transfer function of the determined blade (S904).

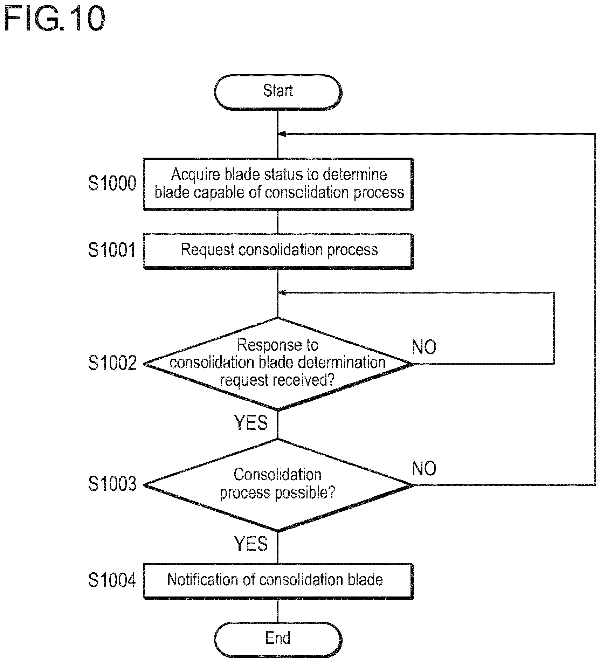

Fig. 10 is a diagram showing the flowchart concerning the consolidation process execution blade determination function of the image scanning system and the image processing system using the master blade according to the embodiment of the present invention. The present function is constantly active in the master blade 300, and waiting for the scanned image transfer request of the scanned image receiving function.

The master blade 300 controls status of each blade including itself, determines the blade capable of consolidation process of the image (S1000), issues a consolidation process request to the determined blade (S1001), and waits for a response to the request (S1002: No).

When the response is received and the response indicates that the consolidation process cannot be done (S1003: No), determines another blade that is capable of image consolidation process (S1000), and waits for its response (S1001, S1002).

If the response from the blade indicates that the image processing is possible (S1003: Yes), it notifies its own scanned image transfer function of the determined blade (S1004).

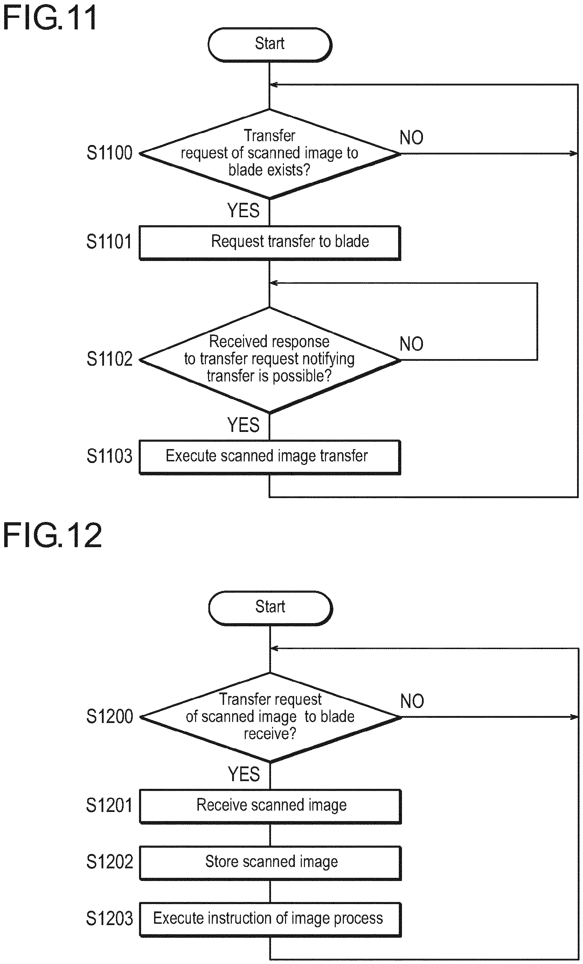

Fig. 11 is a diagram showing the flowchart concerning the scanned image transfer function of the image scanning system and the image processing system using the master blade according to the embodiment of the present invention. The present function is executed on the blade determined to execute the distribution process by executing the distribution instruction function.

The master blade 300 waits for the request of transferring the scanned image to the blade by executing the distributed instruction function (S1100: No), receiving the request (S1100: Yes), issues a transfer request for the scanned image to the transfer destination blade (S 1101).

If the response from the blade to which the scanned image transfer request is issued indicates that the transfer is not possible, the scanned image transfer request is issued again (S 1102: No). On the other hand, if the response from the blade to which the scanned image transfer request is issued indicates that the transfer is possible (S 1102: Yes), the scanned image is transferred to the particular blade (S1103).

Next, the common functions of the master blade 300 and the sub-blade 310 are described.

Fig. 12 is a diagram showing the flowchart concerning the scanned image receiving function of the image scanning system and the image processing system using each blade according to the embodiment of the present invention. The present function is constantly executed on the master blade 300 and the sub-blade 310.

The sub-blade 310 waits for the scanned image transfer request from the master blade 300 (S1200: No), if the transfer request is received (S1200: Yes) makes a judgment as to whether or not the image processing of the scanned image is possible, if the image process is possible, responds to the request that it can be transferred, receives the scanned image transferred to it (S1201), and stores it in the RAM 313 (S1202). After notifying the address of the RAM 313 which is stored the scanned image of the image process function in order to instruct the image process (S1203), it waits for the transfer request for the next scanned image (S1200).

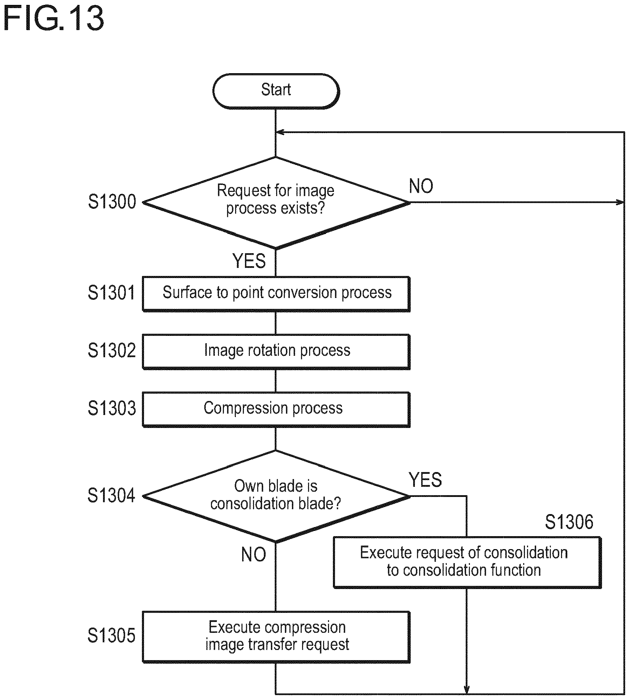

Fig. 13 is a diagram showing the flowchart concerning the image processing function of the image scanning system and the image processing system using each blade according to the embodiment of the present invention. The present function is constantly executed on the master blade 300 and the sub-blade 3010. Furthermore, the image process according to the present function can be done on a plurality of blades in parallel.

Each blade waits for the request of the image process (S1300: No), when the request of the image process is received (S1300: Yes) receives the address of the RAM storing the scanned image received from the scanned image receiving function, executes the surface to point conversion process (S1301), the image rotation process (S1302), and the compression process (S1303) of the particular scanned image, and stores the scanned image in the RAMs 303 and 313 after the compression.

Next, if itself is assigned as the consolidation blade (S1304: Yes), it executes the consolidation request by notifying its own consolidation function of the addresses of RAM 303 and 313 where the compressed images are stored (S1306).

On the other hand, if it is not assigned as the consolidation blade (S1304: No), it notifies its own compressed image transfer function of the addresses of the RAMs 3003 and 313 where the compressed images are stored, and the compressed image transfer function executes the transfer request of the compressed image to the consolidation blade (S1305).

After that, the image process function returns to the status of waiting for the request of image processing of the next scanned image (S1300).

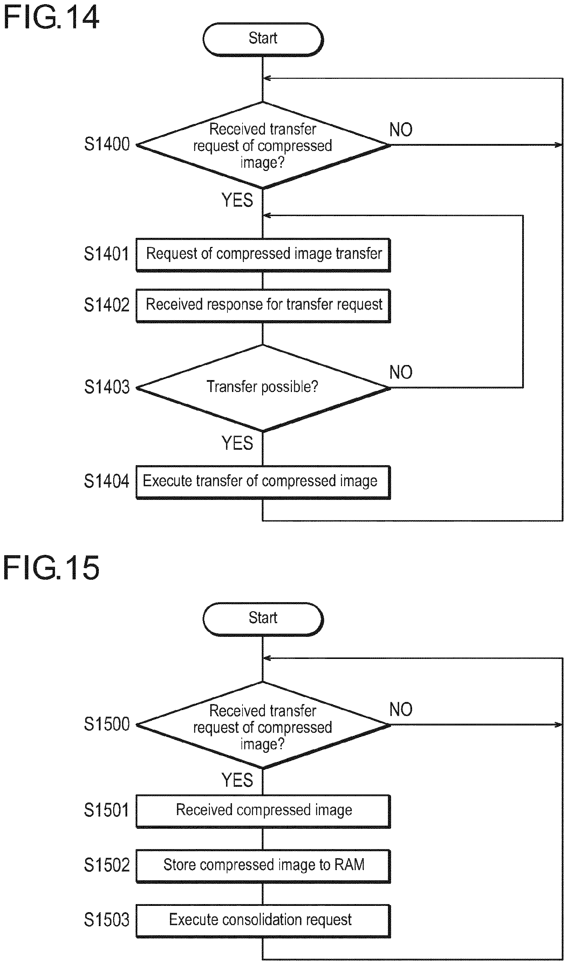

Fig. 14 is a diagram showing the flowchart concerning the compressed image transfer function of the image scanning system and the image processing system using each blade according to the embodiment of the present invention. The present function is constantly executed on the master blade 300 and the sub-blade 3010.

Each blades waits for the request for the transfer of the compressed image (S1400: No), when the request for image processing is received (S1400: Yes), searches the consolidation blade assigned in the master blade 300, requests the identified consolidation blade to transfer the compressed image (S1401), and waits for the response from the consolidation blade.

Receiving the response concerning the compressed image transfer request from the consolidation blade (S1402), if the response indicates that the transfer is impossible (S 1403: No) the compressed image transfer request is repeated.

On the other hand, if the response from the consolidation blade indicates that the transfer is possible (S1403: Yes), the transfer of the compressed image to the consolidation blade is executed (S1404).

After that, the present compressed image transfer function returns to the status of waiting the transfer of the next compressed image (S 1400).

Fig. 15 is a diagram showing the flowchart concerning the compressed image receiving function of the image scanning system and the image processing system using each blade according to the embodiment of the present invention. The present function is a function to be executed at the consolidation blade, which is assigned by the master blade 300 as the consolidation blade, and is initiated when the consolidation blade starts its consolidation function.

The consolidation blade waits for the transfer request of the compressed image from a blade other than the consolidation blade (S 1500: No) and, when the transfer request for the compressed image is received (S1500: Yes), checks if the receiving of the compressed image is possible or not, and responds to the blade which issued the transfer request that it is impossible to receive the compressed image if it is impossible to receive. If the receiving of the compressed image is possible, it responds to the blade which issued the transfer request that it is possible to receive the compressed image and receives the compressed image from the particular blade (S1501). As the transfer of the compressed image starts, the compressed image is stored into the RAMs 303, 313 (S1502). After notifying the consolidation function of the addresses of the RAMs 303 and 313 stored the compressed image in order to request the consolidation (S 1503), it returns to the status of waiting for the transfer request for the next scanned image (S 1500).

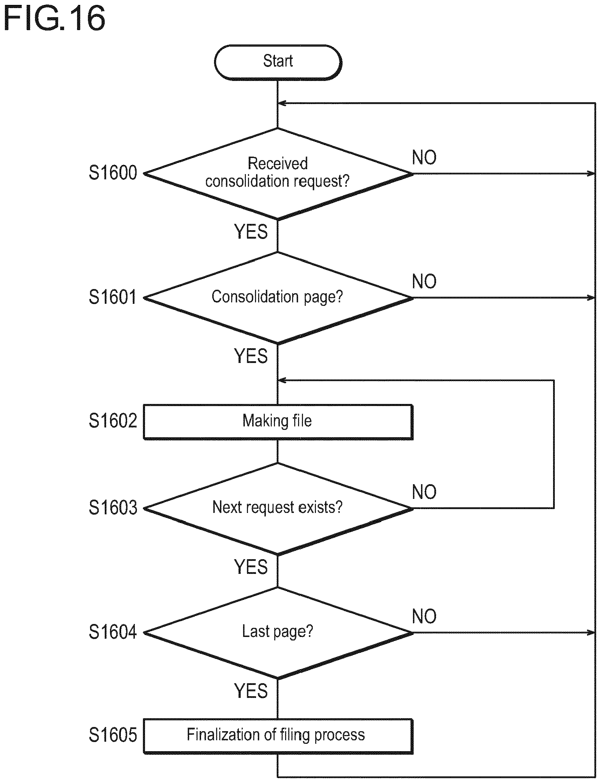

Fig. 16 is a diagram showing the flowchart concerning the consolidation function of the image scanning system and the image processing system using each blade according to the embodiment of the present invention. The present function is a function to be executed at the consolidation blade, which is assigned by the master blade 300 as the consolidation blade, and is initiated when the consolidation blade starts its consolidation function.

The consolidation blade waits for the consolidation request (S1600: No), when the consolidation request is received (S1600: Yes) checks which page the compressed image received belongs to, and returns to the status of waiting for the consolidation request if the compressed image does not belong to the page to be consolidated (S1601: No). On the other hand, if the compressed image belongs to the page to be consolidated (S1601: Yes), it writes the PDF's header and increments the next consolidation page number by 1 to make it a file (S1602). And if there is a next consolidation request (S1603: Yes), it goes on to the next filing process.

The consolidation of the scanned image continues until the last page is filed (S1604), and the finalization of the filing process is executed when the consolidation of all the pages is completed (S1605).

While such is the description of the image scanning system and the image processing system of the present embodiment, the present embodiment provides the following effect.

The present embodiment makes it possible to prevent the abortion of the image scanning process, which may occur due to the insufficient resource of the system, by distributing the scanned image data to a plurality of blade substrates to process the image in parallel simultaneously with reading in the image by the scanning.

Although the present invention is described in detail in the above by an embodiment, the present invention should not be construed to be limited to the above embodiment.

For example, it is possible to make at least one of the master blade and the sub-blades have both the image process function and the consolidation function. Also, it is possible to make at least one of the master blade and the sub-blades be used exclusively for the consolidation function.

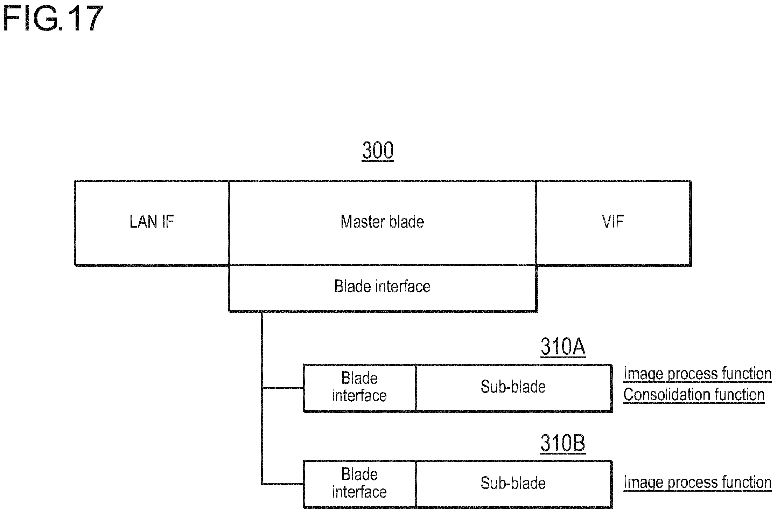

Fig. 17 is a block diagram showing the configuration of the controller according to another embodiment of the present invention.

As shown in Fig. 17, the controller 2 according to the present embodiment causes a sub-blade 301A to provide both the image processing function and the consolidation function, while causing another sub-blade 301B to provide the image processing function. By causing either one of the sub-blades to provide both the image processing function and the consolidation function, it is possible to reduce the number of blades in the controller 2, thus to reduce the cost.

## Claims

1. An image scanning system comprising:
a plurality of blade substrates that executes image processing;
an image scanning unit that scans a document as image data; and
an image process distribution unit that distributes said image data scanned by said image scanning unit to each blade substrate and causes said image data to be processed in parallel simultaneously with scanning of said document by said image scanning unit.

2. The image scanning system as claimed in claim 1, wherein
at least one of said plurality of blade substrates consolidates the image data processed by other blade substrates in order to make a file.

3. The image scanning system as claimed in claim 1, wherein
said plurality of blade substrates comprise a master blade substrate and a plurality of sub-blade substrates, and said master blade substrate controls the statuses of the plurality of blade substrates including itself.

4. The image scanning system as claimed in claim 3, wherein
The control of the statuses of said plurality of blade substrates by said master blade substrate is made by process requests from said master blade substrate to the sub-blade substrates and responses from the sub-blade substrates corresponding to said requests.

5. The image scanning system as claimed in claim 3, wherein
said master blade substrate determines by which sub-blade substrates said image data scanned by said image scanning unit is to be distributively processed based on the statuses of said plurality of blade substrates.

6. The image scanning system as claimed in claim 1, wherein
said plurality of blade substrates comprise a master substrate and a plurality of sub-blade substrates, wherein said master blade substrate determines by which sub-blade substrates said image data scanned by said image scanning unit is to be distributively processed.

7. A scanned image processing apparatus comprising:
a plurality of blade substrates that execute image processing;
an image process distribution unit that distributes scanned image data to each blade and causes said image data to be processed in parallel simultaneously with the receiving of image data by said image scanning unit.

8. The scanned image processing apparatus as claimed in claim 7, wherein
at least one of said plurality of blade substrates consolidates the image data processed by other blade substrates in order to make a file.

9. The scanned image processing apparatus as claimed in claim 8, wherein
said plurality of blade substrates comprise a master blade and a plurality of sub-blade substrates, and said master blade substrate controls the statuses of the plurality of blade substrates including itself.

10. The scanned image processing apparatus as claimed in claim 9, wherein
The control of the statuses of said plurality of blade substrates by said master blade substrate is made by process requests from said master blade substrate to the sub-blade substrates and responses from the sub-blade substrates corresponding to the requests.

11. The scanned image processing apparatus as claimed in claim 9, wherein
said master blade substrate determines by which sub-blade substrates said image data scanned by said image scanning apparatus is to be distributively processed based on the statuses of said plurality of blade substrates.

12. The scanned image processing apparatus as claimed in claim 7, wherein
said plurality of blade substrates comprise a master substrate and a plurality of sub-blade substrates, wherein said master blade substrate determines by which sub-blade substrates said image data scanned by said image scanning apparatus is to be distributively processed.

13. An image scanning method comprising:
(a) a step of causing a plurality of blade substrates to execute image processing;
(b) a step of scanning a document as image data; and
(c) a step of distributing said image data scanned in said step (b) to each blade substrate and causing said image data to be processed in parallel simultaneously with the scanning of said document in step (b).

14. The image scanning method as claimed in claim 13 further comprising:
a step of causing at least one of said plurality of blade substrates to consolidate the image data processed by other blade substrates in order to make a file.

15. A scanned image processing method comprising:
(d) a step of causing a plurality of blade substrates to execute image processing; and
(e) a step of distributing scanned image data to each blade and causes said image data to be processed in parallel simultaneously with the receiving of said image data.
